# FASCICULE DE BREVET EUROPEEN

(11) **EP 0 497 854 B1**
(45) Date de publication et mention de la délivrance du brevet: **09.03.1994**
(21) Numéro de dépôt: 90916317.2
(22) Date de dépôt: 26.10.1990
(51) Int. Cl.: F16H 3/08, F16H 63/30

(54) **BOITE DE VITESSES A EMBRAYAGES RADIAUX ET CONTROLE ELECTRONIQUE**
GETRIEBE MIT RADIAL BETÄTIGTEN KUPPLUNGEN UND ELEKTRONISCHER STEUERUNG
GEARBOX WITH RADIAL COUPLING AND ELECTRONIC CONTROL

(30) Priorité: 26.10.1989 FR 8914051
(43) Date de publication de la demande: 12.08.1992
(73) Titulaire: LEOTARD, Claude, F-75015 Paris (FR)
(72) Inventeur: LEOTARD, Claude, F-75015 Paris (FR)
(74) Mandataire: Sauvage, Renée
(86) Numéro de dépôt international: FR9000774
(87) Numéro de publication internationale: WO9106788

(56) Documents cités:
- EP-A- 281 304
- DE-A- 1 550 895
- DE-C- 418 826
- DE-C- 706 444
- FR-A- 1 394 846
- FR-A- 2 627 567
- GB-A- 523 771
- US-A- 1 851 146
- US-A- 2 719 620
- US-A- 4 836 057

## Description

La présente invention concerne une boîte de vitesses pour véhicule à deux ou quatre roues motrices, offrant au moins un 1er, un 2ème, un 3ème et un 4ème rapports de démultiplication de la transmission en marche avant et un rapport de démultiplication en marche arrière, ladite boîte de vitesses étant adaptée à mettre en corrélation, par une démultiplication appropriée, le nombre de tours d'un arbre primaire et le nombre de tours d'au moins un arbre secondaire, ladite boîte de vitesses comportant des pignons montés fixes sur un arbre et dont les dents engrènent de façon permanente celles de pignons montés fous sur un arbre, chaque pignon ayant un plan radial intersectant ses dents, les pignons montés fous de marche arrière et de premier rapport étant montés sur l'arbre secondaire tandis que les pignons montés fixes correspondants de marche arrière et de premier rapport sont montés sur l'arbre primaire, et des moyens d'accouplement, adaptés à bloquer individuellement en rotation sur leur arbre lesdits pignons montés fous, étant interposés entre lesdits pignons montés fous et leurs arbres respectifs, ces moyens d'accouplement étant montés fixes sur lesdits arbres.

Une boîte de vitesses de ce type est connue d'après DE-A-1.550̸.895.

Dans la suite de la présente description et dans les revendications, on entend par "monté fixe", bloqué à la fois en rotation et en translation par rapport à l'arbre porteur et par "monté fou", libre en rotation mais bloqué en translation.

Dans les boîtes de vitesses mécaniques du type précité, à l'exception des pignons de marche arrière qui inversent le mouvement, tous les pignons sont constamment en prise. Les pignons montés fixes le sont sur un arbre intermédiaire et les pignons montés fous le sont sur l'arbre secondaire entraîné constamment en rotation par une paire de pignons en prise et monté, l'un, sur l'arbre primaire en liaison avec l'arbre moteur, l'autre sur l'arbre secondaire. Par enclenchement, par exemple, de la première vitesse, tandis que la pédale de débrayage est déprimée, le pignon monté fou correspondant est accouplé à, ou bloqué sur, l'arbre secondaire de sorte que, lorsque l'on embraye, l'arbre intermédiaire se trouve entraîné en rotation selon le premier rapport de marche avant.

Pour réaliser cet accouplement, le levier de changement de vitesses agit sur des pièces qui attaquent les pignons latéralement, c'est-à-dire selon une direction parallèle à l'axe de l'arbre sur lequel les pignons sont montés fous, et qui ont un encombrement loin d'être négligeable. Or il serait souhaitable de réduire cet encombrement.

Ce but est atteint selon l'invention en ce sens qu'elle apporte une boîte de vitesses, caractérisée en ce que les moyens d'accouplement agissent radialement par rapport à l'axe de rotation dudit arbre, ladite direction radiale étant comprise dans le plan radial du pignon concerné et en ce que lesdits moyens d'accouplements sont du type par embrayage à friction sur le premier rapport de marche avant et sur la marche arrière, qui demandent un accouplement aussi progressif que possible puisque, dans ces deux cas de figures, le vehicule passe de l'état arrêté à l'état de mouvement, et du type par crabotage sur les autres rapports de marche avant.

Dans la pratique, chacun des moyens d'accouplement selon l'invention comporte au moins deux ensembles régulièrement espacés par rapport à la périphérie de l'arbre sur lequel lesdits moyens sont montés fixes, lesdits ensembles étant orientés radialement par rapport à l'axe dudit arbre, et chacun de ces ensembles comprenant, d'une part, une cavité cylindrique et, d'autre part, un piston ayant une face "proximale" proche de l'axe dudit arbre et une face "distale" éloignée dudit axe, ledit piston étant mobile dans ladite cavité cylindrique, entre une position proximale de désaccouplement et une position distale d'accouplement, cette dernière lui étant imposée par une pression exercée depuis l'intérieur dudit arbre.

On comprend que, lorsque les moyens d'accouplement comportent deux ensembles tels que définis ci-dessus, ces ensembles seront diamètralement opposés, que lorsqu'ils en comportent trois, les axes longitudinaux desdits ensembles feront entre eux un angle de 120̸°, que lorsqu'ils en comportent quatre, ces ensembles seront disposés en croix, etc.

Avantageusement, la pression exercée depuis l'intérieur de l'arbre sera une pression de fluide fournie par une pompe, via des passages appropriés, lequel fluide pourra être un liquide ou un gaz.

Dans le cas des moyens d'accouplement par crabotage, la face distale du piston présente un téton adapté à venir en prise avec une cannelure de géométrie correspondante prévue dans l'alésage du pignon monté fou et ladite pression s'exerce à l'encontre de la force de moyens de rappel.

Dans le cas des moyens d'accouplement par embrayage à friction, la face distale du piston supporte une garniture courbe adaptée à venir en contact avec l'alésage du pignon monté fou.

Les pignons montés fous le sont par insertion entre une paire de flasques latéraux avec interposition, entre les faces en vis-à-vis des flasques et du pignon, de billes prisonnières entre des pistes de roulement prévues dans lesdites faces, lesdits flasques étant montés fixes sur l'arbre dont dépend ledit pignon.

Il est avantageusement prévu des moyens élastiques adaptés à assurer un déphasage entre ledit arbre primaire et ledit arbre secondaire pour faciliter le désaccouplement des moyens de crabotage concerné d'avec le pignon monté fou correspondant.

La boîte de vitesses selon l'invention peut être appliquée à une transmission avant et arrière, auquel cas il est prévu deux arbres secondaires, l'un, dit "premier" arbre secondaire, correspondant à celui évoqué plus haut et l'autre, dit "deuxième" arbre secondaire, spécifique à la transmission intégrale. Dans ce cas, la boîte de vitesses comprend, en outre, des moyens d'accouplement par embrayage à friction et crabotage combinés montés fixes sur ledit deuxième arbre secondaire et interposés entre un pignon monté fou sur ledit deuxième arbre secondaire et engrené dans le rapport 1:1 en permanence avec un pignon monté fixe sur ledit premier arbre secondaire, grâce à quoi l'accouplement dudit pignon monté fou audit deuxième arbre secondaire, par l'entremise desdits moyens d'embrayage à friction/crabotage combinés permet d'obtenir la transmission intégrale.

L'invention est applicable aux boîtes de vitesses automatiques.

Les boîtes de vitesses automatiques équipent les véhicules à deux ou quatre roues munis d'un sélecteur manuel de mode de fonctionnement selon le type d'environnement routier (route, autoroute, ville, montagne, etc.).

Si les boîtes de vitesses automatiques ont l'avantage, par rapport aux boîtes de vitesses mécaniques, de ne nécessiter le recours ni à une pédale de débrayage/embrayage, ni à un levier de changement de vitesses pour passer d'un rapport à l'autre en marche avant, elles ont par contre l'inconvénient d'avoir un nombre de rapports limités, d'occasionner une perte de puissance en sortie et d'entraîner une plus grande consommation de carburant.

Pour remédier à cette situation, l'invention propose de munir la boîte de vitesses d'un calculateur comprenant un microprocesseur programmé pour un passage ou un non-passage de rapports préétabli, et adapté soit à abaisser le régime du moteur pour le passage en montée de rapport, soit à élever ledit régime pour le rétrogradage, assurant ainsi la synchronisation entre la vitesse du pignon monté fou du rapport sélectionné et celle de l'arbre sur lequel il est monté pour permettre leur accouplement.

Dans la pratique, le calculateur est adapté :
- à recevoir, en entrée, un signal caractéristique du type de mode de fonctionnement sélectionné, un signal indiquant le nombre de tours à l'entrée de la boîte de vitesses, un signal indiquant le nombre de tours à la sortie de la boite de vitesses et, selon le cas, un signal de rétrogradage commandé ou un signal de passage des rapports en régime maximal ou un signal d'interdiction de passage en montée de rapport et, le cas échéant, un signal de "pied sur le frein", et
- à émettre, en sortie, des signaux d'actionnement de moyens de commande agissant sur les moyens d'accouplement.

Lorsque la pression exercée sur les pistons des moyens d'accouplement est une pression de fluide, lesdits signaux de sortie peuvent agir, d'une part, sur au moins un clapet du type à régulation proportionnelle et, d'autre part, sur des moyens obturateurs du type électrovannes à trois voies, dont le nombre correspond à celui des rapports, l'une desdites voies étant en liaison avec un moyen d'accouplement, une autre voie étant en liaison avec ledit clapet et la troisième voie est reliée à un bocal récupérateur pour le renvoi, vers ce dernier, de la pression résiduelle lors du désaccouplement.

De préférence, le calculateur est susceptible d'émettre, en outre, un signal commandant des moyens du type interrupteur du système d'alimentation "moteur" pour permettre une brève chute du nombre de tours "moteur", grâce à quoi se trouvent facilités, d'une part, le décrabotage pendant la période de déphasage et, d'autre part, la synchronisation du pignon monté fou concerné avec les moyens d'accouplement par crabotage correspondants pendant les montées de rapport.

L'invention est décrite ci-après en détail par référence aux dessins annexés dans lesquels :
- la figure 1 est une vue en coupe d'une forme d'exécution d'une boîte de vitesses automatique à gestion électronique de surveillance, selon l'invention ;
- les figures 2 à 4 représentent des détails, à plus grande échelle, de la figure 1, la correspondance étant signalée respectivement par les surfaces (A,B,C,D), (E,F,G) et (G,H,I) sur la figure 1;
- la figure 5 est une vue frontale correspondant à la figure 1, et
- la figure 6 est un bloc-diagramme illustrant la gestion électronique de surveillance de la boîte de vitesses automatique selon l'invention.

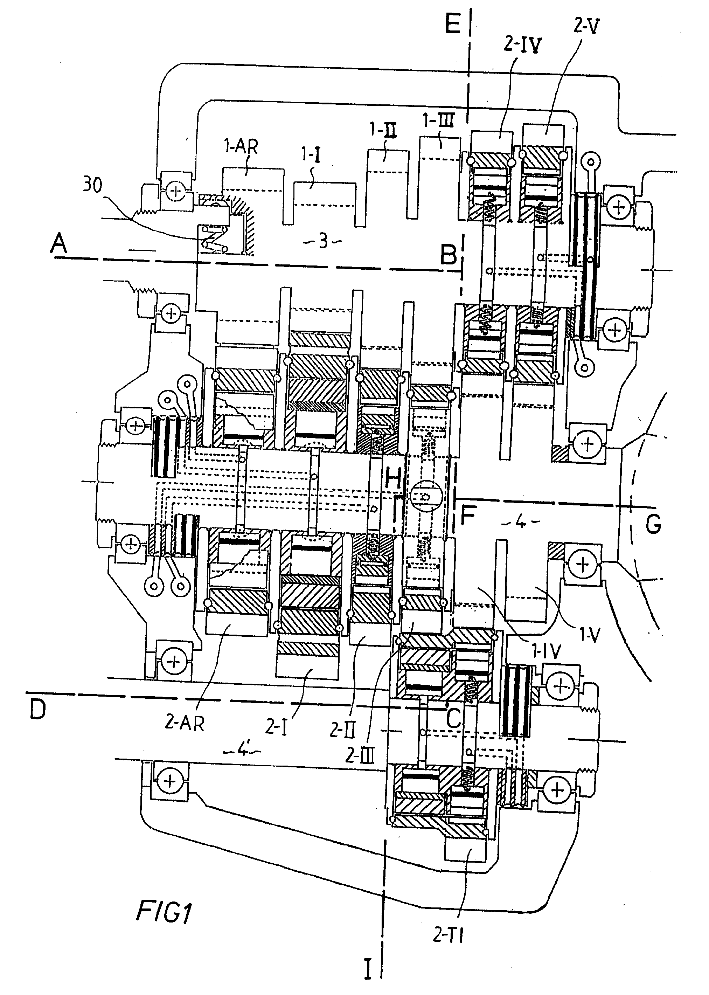

Si l'on se réfère aux figures 1 à 5, on voit que la boîte de vitesses automatique selon l'invention renferme un arbre primaire 3 en liaison avec l'arbre moteur non, représenté, arbre primaire 3 sur lequel sont montés :
- fixes (1), de gauche à droite sur la figure 1, un pignon de marche arrière 1-AR et, pour la marche avant, un pignon de 1er rapport 1-I, un pignon de 2ème rapport 1-II et un pignon de 3ème rapport 1-III, et
- fous (2), de gauche à droite, à la suite des précédents, un pignon de 4ème rapport 2-IV et un pignon de 5ème rapport 2-V de marche avant.

La boîte de vitesses automatique selon l'invention renferme en outre un premier et un deuxième arbres secondaires, respectivement, 4 et 4'.

Sur le premier arbre secondaire 4 sont montés :
- fous, de gauche à droite, un pignon de marche arrière 2-AR et, pour la marche avant, un pignon de 1er rapport 2-I, un pignon de 2ème rapport 2-II et un pignon de 3ème rapport 2-III, et
- fixes, de gauche à droite, à la suite des précédents, un pignon de 4ème rapport 1-IV et un pignon de 5ème rapport 1-V de marche avant.

Sur le deuxième arbre secondaire est monté fou un pignon de transmission intégrale 2-TI.

Les pignons fixes et fous s'engrènent en permanence comme suit : 1AR/2AR, 1-I/2-I, 1-II/2-II, 1-III/2-III, 2-IV/1-IV/2-TI et 1-V/2-V.

Le fait que les pignons de marche arrière 2AR et de 1er rapport 2-I, soient montés fous sur l'arbre secondaire 4 auxquels ils peuvent être accouplés à l'aide de moyens d'accouplement par embrayage à friction, comme on le verra plus loin, a pour avantage de bénéficier de leur démultiplication de pignons fous par rapport aux pignons fixes de l'arbre primaire.

Pour ce qui est de l'inversion du montage entre, d'une part, les pignons de 2ème rapport et de 3ème rapport et, d'autre part, les pignons de 4éme rapport et de 5ème rapport, elle est dictée uniquement par des considérations d'encombrement.

La référence 30̸ désigne un ensemble de moyens élastiques qui assurent le déphasage entre les arbres primaire 3 et secondaires 4,4' pour faciliter le désaccouplement des moyens d'accouplement par crabotage décrits plus loin et du pignon monté fou correspondant.

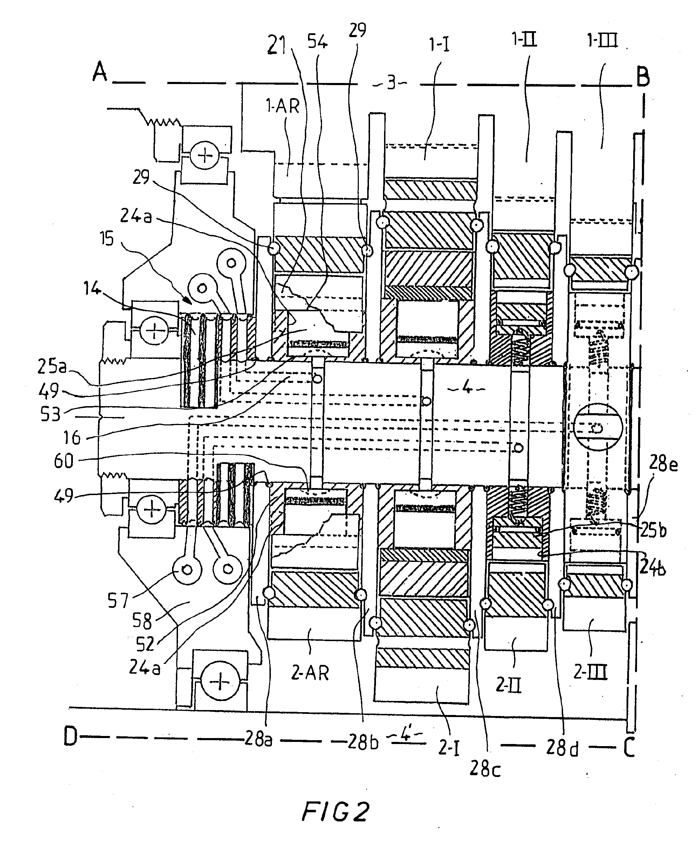

Si l'on se réfère à la figure 2, on voit que, sur l'arbre secondaire 4, sont montés fixes cinq flasques 28a, 28b, 28c, 28d et 28e qui, pris deux à deux, sont adaptés à recevoir les pignons 2-AR (flasques 28a, 28b), 2-I (flasques 28b, 28c), 2-II (flasques 28c, 28d) et 2-III (flasques 28d, 28e).

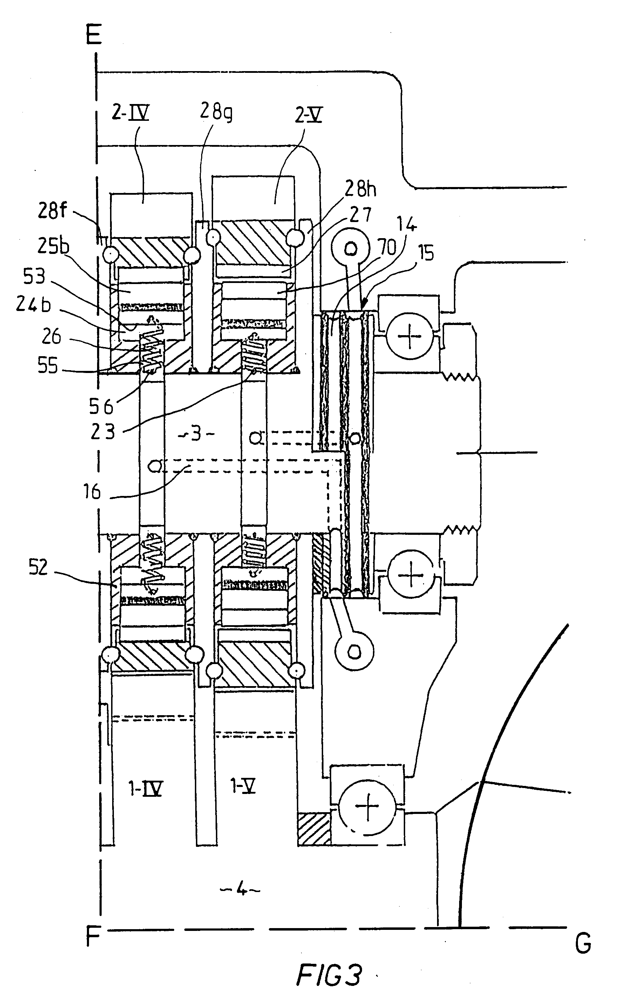

On ne se réfèrera maintenant qu'au pignon 2-AR, la structure étant la même pour le pignon 2-I. Pour ce qui est des pignons 2-II et 2-III, dont la structure est la même que celle utilisée pour les pignons 2-IV et 2-V, on se reportera aux explications données à propos de la figure 3.

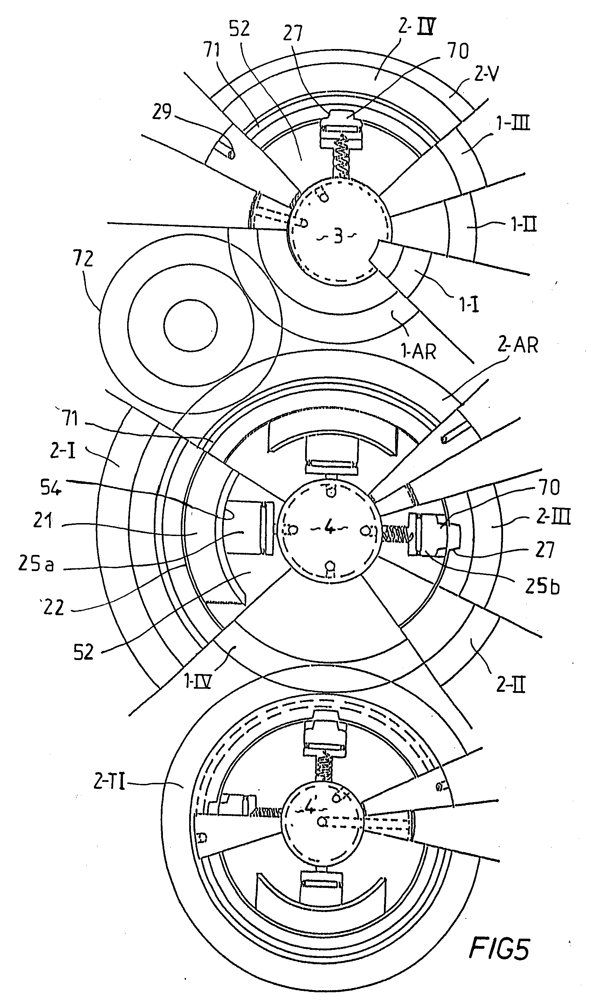

Le pignon 2-AR est monté fou entre les flasques 28a, 28b par l'entremise de billes 29 emprisonnées entre des pistes de roulement 71 (figure 5) prévues sur les faces en vis-à-vis des flasques 28a, 28b et du pignon 2-AR. Entre les flasques 28a et 28b, est logée une pièce annulaire 52, interposée entre l'arbre secondaire 4 et le pignon 2-AR, ladite pièce annulaire 52 étant montée fixe sur ledit arbre 4. Dans la pièce 52 sont ménagées quatre cavités cylindriques 24a disposées en croix et dont deux sont visibles à la figure 2. Chaque cavité cylindrique 24a reçoit un piston 25a présentant une face proximale 53 et une face distale 54. Pour reprendre le vocabulaire utilisé plus haut, les moyens d'accouplement sont donc constitués par la pièce 52 avec ses quatre ensembles disposés en croix, formé chacun d'une cavité cylindrique 24a et d'un piston 25a.

Comme on le voit mieux à la figure 5, la face d'extrémité distale 54 du piston 25a supporte une garniture courbe 21 dont la géométrie correspond à celle de l'alésage 22 du pignon 2-AR.

A l'état désaccouplé, la garniture 21 du piston 25a est à l'écart de l'alésage 22 (cas des pignons 2-AR et 2-I).

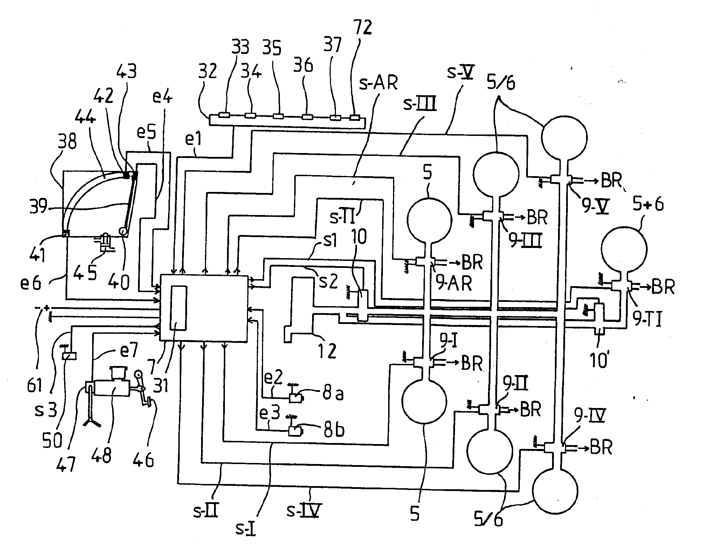

La face proximale 53 du piston 25a présente un évidement 60̸ en vis-à-vis d'un orifice par lequel débouche un canal d'amenée d'huile alimenté par une conduite 16, recevant elle-même l'huile d'un distributeur 15. Le distributeur 15, qui est calé sur l'arbre 4, tourne avec lui. La périphérie du distributeur 15 présente quatre rainures 14 alimentées respectivement par quatre conduits 57 en communication avec un circuit de fluide comportant une pompe 12 (figure 6) comme on le verra plus loin. Des joints d'étanchéité 49 sont prévus entre le distributeur 15 et la structure 58 dans laquelle il tourne, ainsi qu'entre les flasques 28a-28e, d'une part, et les pièces annulaires 52, d'autre part.

Lorsque de l'huile sous pression est injectée dans l'évidement 60̸, les pistons 25a sont repoussés vers l'extérieur et leurs garnitures 21 viennent s'appliquer contre l'alésage 22 du pignon 2-AR. Le pignon concerné est alors embrayé. Comme il est constamment en prise avec le pignon 1-AR, la rotation de ce dernier est transmise, dans le rapport voulu, à l'arbre secondaire 4 sur lequel est maintenant bloqué le pignon 2-AR.

Si l'on se réfère maintenant à la figure 3, où les mêmes références ont été utilisées pour désigner les mêmes éléments qu'à la figure 2, on voit que, sur l'arbre primaire 3, sont montés fixes trois flasques 28f, 28g et 28h qui, deux à deux, sont adaptés à recevoir les pignons 2-IV (flasques 28f, 28g) et 2-V (flasques 28g, 28h).

On ne se réfèrera maintenant qu'au pignon 2-IV, la structure étant la même pour le pignon 2-V.

Ce pignon 2-IV est monté fou entre les flasques 28f, 28g comme le pignon 2-AR entre les flasques 28a, 28b. La structure utilisée ici se distingue de la précédente par le fait que la face d'extrémité distale 54 de chaque piston 25b présente un téton 70̸ dont la géométrie correspond à celle de cannelures 27 prévues dans l'alésage 22 du pignon 2-IV (ce que l'on voit mieux à la figure 5) et par le fait que la face proximale 53 de chaque piston 25b est appliquée contre le fond de la cavité cylindrique 24b par un ressort 26, accueilli dans un logement 55 et dont les extrémités sont solidarisées respectivement à l'extrémité proximale du piston 25b et à un point d'ancrage 56.

A l'état désaccouplé, les tétons 70̸ sont à l'écart des cannelures 27 (cas du pignon 2-V).

Dans le logement 55 du ressort 26 débouche, par un orifice 23, un canal d'amenée d'huile alimenté par une conduite 16, recevant elle-même l'huile d'un distributeur 15 similaire à celui décrit précédemment, à cela près qu'il ne comporte que deux rainures périphériques 14.

Lorsque la pression de l'huile injectée dans le logement 55 excède la force du ressort 26, les pistons 25b sont repoussés vers l'extérieur et leurs tétons 70̸ viennent en prise avec les cannelures 27 du pignon en vis-à-vis (cas du pignon 2-IV). Le pignon concerné est alors craboté. Comme il est constamment en prise avec le pignon 1-IV, la rotation du pignon 2-IV, maintenant conforme à celle de l'arbre primaire 3 auquel il est accouplé, est transmise, dans le rapport voulu, à l'arbre secondaire par le pignon 1-IV.

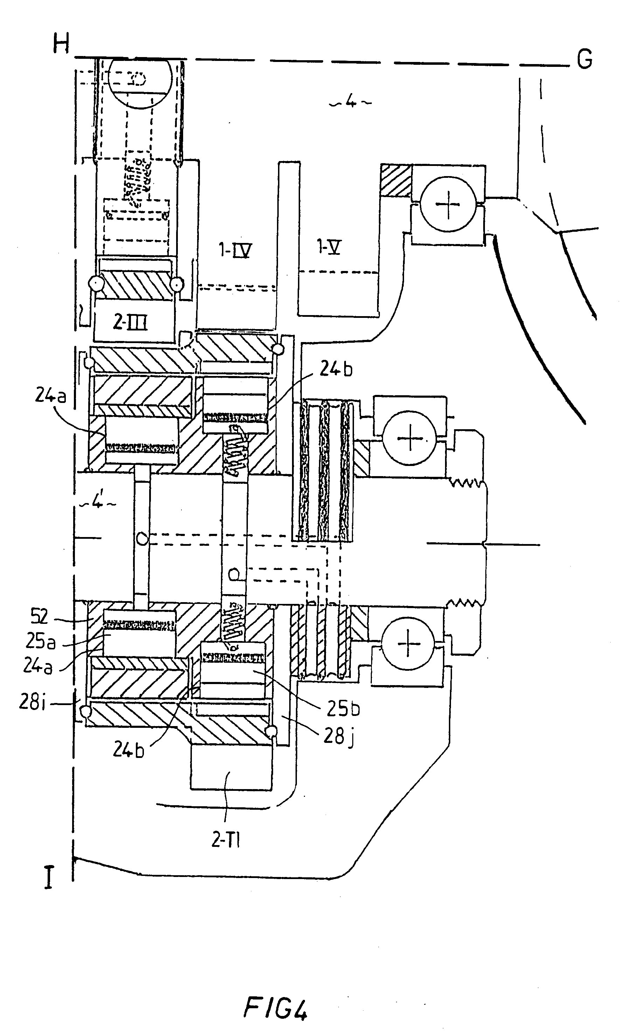

Si l'on se réfère à la figure 4, on voit que les moyens d'accouplement du pignon 2-TI utilisent tant les moyens d'embrayage à friction décrits en détail par référence à la figure 2, que les moyens de crabotage décrits en détail par référence à la figure 3.

Plus précisément, sur l'arbre secondaire 4', sont montés fixes deux flasques 28i et 28j qui sont adaptés à recevoir le pignon 2-TI, lequel est monté fou entre lesdits flasques de la même façon que précédemment. Dans la pièce 52 sont ménagés un premier groupe de quatre cavités cylindriques 24a disposées en croix et un deuxième groupe de cavités cylindriques 24b disposées en croix. Chaque cavité cylindrique 24a reçoit un piston 25a de même structure que le piston 25a décrit par référence à la figure 2 (piston d'embrayage), tandis que chaque cavité cylindrique 24b reçoit un piston 25b de même structure que le piston 25b décrit par référence à la figure 3 (piston de crabotage). Pour le reste, les moyens utilisés sont les mêmes que précédemment.

La figure 5 montre, avec plus de clarté, la forme des pistons 25a avec leur garniture courbe 21 adaptée à venir s'appliquer contre l'alésage 22 du pignon monté fou (embrayage à friction) et celle des pistons 25b avec leurs tétons 70̸ adaptés à venir en prise chacun avec une cannelure 27 du pignon monté fou (crabotage).

La figure 5 montre également le pignon 72 de renvoi pour la marche arrière.

Si l'on se réfère maintenant à la figure 6, on voit les moyens utilisés pour la gestion électronique de surveillance de la boîte de vitesses automatique.

Dans cette figure, les cercles identifiés par la référence 5 symbolisent des moyens d'accouplement par embrayage à friction selon l'invention tandis que les cercles identifiés par la référence mixte 5/6 symbolisent des moyens d'accouplement par embrayage à friction 5 ou par crabotage 6, et ceux identifiés par la référence 5+6 des moyens d'accouplement par embrayage à friction et crabotage combiné, selon l'invention.

Ces moyens d'accouplement sont alimentés en huile sous pression par une pompe 12, dont la sortie aboutit à un clapet du type à régulation proportionnelle 10̸ adapté à définir la pression nécessaire aux moyens d'accouplement, clapet 10̸ depuis lequel sont alimentés les moyens d'accouplement 5 ou 5/6 des pignons montés fous de tous les rapports de marche avant et arrière, sauf le rapport de transmission intégrale. Une dérivation de la sortie de la pompe 12 aboutit à un clapet semblable 10̸' spécifique à la transmission intégrale.

Entre le clapet 10̸ et chaque moyen d'accouplement 5 ou 5/6 est interposée une électrovanne à trois voies, respectivement, 9-AR, 9-I, 9-II, 9-III, 9-IV et 9-V adaptée à libérer la pression en provenance de la pompe 12 vers les moyens d'accouplement correspondants. Une voie de chaque électrovanne 9 est reliée au clapet 10̸, une autre voie aux moyens 5 ou 5/6 et la troisième voie à un bocal de récupération d'huile BR non représenté. La structure est la même pour l'électrovanne à trois voie 9-TI.

La figure 6 montre également :
- la pédale de freinage 46 avec le maître-cylindre de frein 48 et un contact 47 de "pied sur le frein" ayant pour but d'assurer le rétrogradage de rapports et, lorsque l'on est en marche arrière ou bien en 1ère à moins de 150̸0̸ tours moteur par exemple, d'assurer la libération progressive de la pression exercée dans les moyens d'accouplement et contrôlée par le clapet 10̸.
- le sélecteur 32 de type de mode de fonctionnement, actionnable manuellement, et comportant les positions "route" 33, "autoroute" 34, "ville" 35, "montagne" 36, "transmission intégrale" 37, et "marche arrière" 72,
- des capteurs 8a et 8b, respectivement, de nombre de tours à l'entrée de la boîte de vitesses et de nombre de tours à la sortie de la boîte de vitesses, et
- un boîtier à contacts 38 formant cadran, avec une échelle 44 de charge moteur, un bras 39 servant à la fois d'aiguille indicatrice et de curseur. Le bras 39 est monté fixe sur un axe 40̸ commandé par un câble d'accélérateur relié à la pédale d'accélérateur. En tant que curseur, le bras 39 est susceptible de coopérer avec un contact de rétrogradage commandé 43, un contact de passage des rapports à régime maximal 42, et un contact d'interdiction de passage en montée de rapport 41.

Des moyens 45 du type ralentisseur de papillon, actionnés par exemple par dépression, sont susceptibles de coopérer avec l'axe 40̸, lors du passage de rapports en rétrogradage automatique "pied levé" et en rétrogradage de freinage "pied sur la pédale de frein" pour assurer le nombre de tours moteur voulu.

Pour en venir aux moyens de gestion électronique, ils comprennent un calculateur 7 renfermant un microprocesseur 31 convenablement programmé pour gérer le passage ou le non-passage de rapports, et alimenté par la batterie 61 du véhicule.

Le calculateur 7 est adapté à recevoir en entrée :
- selon la ligne e1, un signal caractéristique du type de mode de fonctionnement sélectionné,
- selon la ligne e2, un signal indiquant le nombre de tours à l'entrée de la boîte de vitesses,
- selon la ligne e3, un signal indiquant le nombre de tours à la sortie de la boite de vitesses, et
   en fonction de la situation de fait
- selon la ligne e4, un signal de rétrogradage commandé,
- selon la ligne e5, un signal de passage des rapports en régime maximal,
- selon la ligne e6 un signal d'interdiction de passage en montée de rapport,
- selon la ligne e7, un signal de "pied sur le frein".

En réponse à ces signaux d'entrée et en fonction du programme mémorisé dans le microprocesseur 31, le calculateur 7 est susceptible d'émettre en sortie :
- selon les lignes s1 ou s2, des signaux de commande des clapets 10̸ ou 10̸'
- selon les lignes s-AR, s-I, s-II, s-III, s-IV, s-V et s-TI, des signaux de commande des électrovannes à trois voies correspondantes 9-AR, 9-I, 9-II, 9-III, 9-IV, 9-V et 9-TI ,
- selon la ligne s3, un signal commandant des moyens du type interrupteur 50̸ du système d'alimentation "moteur" pour permettre une brève chute du nombre de tours "moteur" correspondants.

Le principe du fonctionnement du système est le suivant :

Au départ, moteur tournant, pompe 12 en action, véhicule à l'arrêt, le calculateur reçoit le signal e2. Dès que l'on passe de la position parking au mode de fonctionnement sélectionné. le calculateur reçoit en outre un signal e1. En réponse, il envoie un signal s2 pour ouvrir progressivement le clapet 10̸ en libérant la pression d'huile vers les électrovannes 9-AR et 9I à 9V, ainsi qu'un signal s-I vers l'électrovanne 9-I. Une pression d'huile est admise dans les moyens d'accouplement par embrayage à friction 5 correspondants, ce qui aboutit à enclencher le 1er rapport.

Si la vitesse augmente, le calculateur, en fonction du programme mémorisé dans le microprocesseur 31 et des signaux reçus, envoie un signal s3 pour provoquer une micro-chute de tours moteur et faciliter l'accouplement du 2ème rapport par crabotage, interrompt l'émission du signal s-I pour désaccoupler le 1er rapport et envoie un signal s-II pour accoupler le 2ème rapport, et ainsi de suite.

Ce principe de fonctionnement étant décrit, l'homme de métier comprendra comment se font la suite de montée en rapports et le rétrogradage, ainsi que le passage en marche arrière ou en transmission intégrale.

Il ressort de la présente description que l'invention perfectionne le principe, tant des boîtes de vitesses mécaniques que des boîtes de vitesses automatiques et qu'il en résulte une réduction de l'encombrement par une direction d'attaque et une localisation plus judicieuses des moyens d'accouplement ainsi que par une suppression de composants (entre autres : axes, fourchettes, baladeurs dans le cas des boîtes de vitesses mécaniques ; convertisseur de couple dans le cas des boîtes de vitesses automatiques). En outre, cette structure nouvelle débouche sur une fiabilité accrue de la boîte de vitesses.

La boîte de vitesses selon l'invention, dans sa version automatique à gestion électronique de surveillance, allie donc la facilité de conduite avec l'obtention d'une puissance optimale en sortie de boite, ce qui se traduit par un confort et une sécurité accrus, sans parler de la réduction de consommation de carburant.

## Revendications

1. Boîte de vitesses pour véhicule à deux ou quatre roues motrices, offrant au moins un 1er, un 2ème, un 3ème et un 4ème rapports de démultiplication de la transmission en marche avant et un rapport de démultiplication en marche arrière, ladite boîte de vitesses étant adaptée à mettre en corrélation, par une démultiplication appropriée, le nombre de tours d'un arbre primaire (3) et le nombre de tours d'au moins un arbre secondaire (4, 4'), ladite boîte de vitesses comportant des pignons montés fixes (1) sur un arbre et dont les dents engrènent de façon permanente celles de pignons montés fous (2) sur un arbre, chaque pignon ayant un plan radial intersectant ses dents, les pignons montés fous de marche arrière (2-AR) et de premier rapport (2-I) étant montés sur l'arbre secondaire (4), tandis que les pignons montés fixes correspondants de marche arrière (1-AR) et de premier rapport (1-I) sont montés sur l'arbre primaire (3), et des moyens d'accouplement (5,6), adaptés à bloquer individuellement en rotation sur leur arbre lesdits pignons montés fous étant interposés entre lesdits pignons montés fous (2) et leurs arbres respectifs, ces moyens d'accouplement (5,6) étant montés fixes sur lesdits arbres, caractérisé en ce que lesdits moyens d'accouplement (5,6) agissent selon une direction radiale par rapport à l'axe de rotation dudit arbre, ladite direction radiale étant comprise dans ledit plan radial du pignon concerné, et en ce que lesdits moyens d'accouplement sont du type par embrayage à friction (5) sur le premier rapport de marche avant et sur la marche arrière et du type par crabotage (6) sur les autres rapports de marche avant.

2. Boîte de vitesses selon la revendication 1, caractérisée en ce que chacun desdits moyens d'accouplement (5,6) comporte au moins deux ensembles régulièrement espacés par rapport à la périphérie de l'arbre sur lequel lesdits moyens sont montés fixes, lesdits ensembles étant orientés selon une direction radiale par rapport à l'axe dudit arbre, ladite direction radiale étant comprise dans ledit plan radial du pignon concerné, et lesdits ensembles comprenant chacun, d'une part, une cavité cylindrique (24a, 24b) et, d'autre part, un piston (25a, 25b) ayant une face "proximale" (53) proche de l'axe dudit arbre et une face "distale" (54) éloignée dudit axe, ledit piston (25a, 25b) étant mobile dans ladite cavité cylindrique (24a, 24b), entre une position proximale de désaccouplement et une position distale d'accouplement, cette dernière lui étant imposée par une pression exercée depuis l'intérieur dudit arbre.

3. Boîte de vitesses selon la revendication 2, caractérisée en ce que, dans le cas des moyens d'accouplement par crabotage (6), la face distale (54) du piston (25b) présente un téton (70̸) adapté à venir en prise avec une cannelure (27) de géométrie correspondante prévue dans l'alésage (22) du pignon monté fou (2).

4. Boîte de vitesses selon la revendication 2, caractérisée en ce que, dans le cas des moyens d'accouplement par embrayage à friction (5), la face distale (54) du piston (25a) supporte une garniture courbe (21) adaptée à venir contact avec l'alésage (22) du pignon monté fou (2).

5. Boîte de vitesses selon l'une quelconque des revendications 1 à 4, caractérisée en ce que lesdits pignons montés fous (2) le sont par insertion entre une paire de flasques latéraux (28) avec interposition, entre les faces en vis-à-vis des flasques (28) et du pignon (2), de billes (29) prisonnières entre des pistes de roulement (71) prévues dans lesdites faces, lesdits flasques (28) étant montés fixes sur l'arbre dont dépend ledit pignon (2).

6. Boîte de vitesses selon l'une quelconque des revendications 1 à 5, caractérisée en ce qu'elle comporte, en outre, des moyens élastiques (30) adaptés à assurer un déphasage entre ledit arbre primaire (3) et ledit arbre secondaire (4, 4') pour faciliter le désaccouplement des moyens de crabotage (6) concernés d'avec le pignon (2) monté fou correspondant.

7. Boite de vitesses selon l'une quelconque des revendications 1 à 6 appliquée à une transmission avant et arrière, dans laquelle ledit arbre secondaire (4) est dit "premier" arbre secondaire, caractérisée en ce qu'elle comprend, en outre, des moyens d'accouplement par embrayage à friction et crabotage combinés (5, 6) montés fixes sur un deuxième arbre secondaire (4') et interposés entre un pignon monté fou (2-TI) sur ledit deuxième arbre secondaire (4') et engrené dans le rapport 1:1 en permanence avec un pignon (1-IV) monté fixe sur ledit premier arbre secondaire (4), grâce à quoi l'accouplement dudit pignon monté fou (2-TI) audit deuxième arbre secondaire (4'), par l'entremise desdits moyens d'embrayage à friction/crabotage (5,6) combinés permet d'obtenir une transmission intégrale.

8. Boîte de vitesses selon l'une quelconque des revendications 1 à 7, pour véhicule à deux ou quatre roues muni d'un sélecteur manuel (32) de mode de fonctionnement (ville, autoroute, montagne, etc.), qui comporte un calculateur (7) comprenant un microprocesseur (31) adapté soit à abaisser le régime du moteur pour le passage en montée de rapport, soit à élever ledit régime pour le rétrogradage, assurant ainsi la synchronisation entre la vitesse du pignon (2) monté fou du rapport sélectionné et celle de l'arbre sur lequel il est monté pour permettre leur accouplement, caractérisé en ce que ledit microprocesseur est programmé pour un passage ou un non-passage de rapports préétabli.

9. Boîte de vitesses selon la revendication 8, dans laquelle le calculateur (7) est adapté :
- à recevoir du sélecteur (32), en entrée, un signal (e1) caractéristique du type de mode de fonctionnement sélectionné (33-37,72), un signal (e2) indiquant le nombre de tours à l'entrée de la boîte de vitesses, un signal (e3) indiquant le nombre de tours à la sortie de la boîte de vitesses de l'arbre secondaire et,
- à émettre, en sortie, des signaux (s1 et/ou s2 ; s-I, s-II, s-III, s-IV, s-V, s-AR et s-TI) d'actionnement de moyens de commande (10̸ ou 10̸' ; 9-I, 9-II, 9-III, 9-IV, 9-V 9-AR et 9-TI) agissant sur les moyens d'accouplement (5, 6 ou 5+6).
caractérisée en ce que ledit calculateur reçoit, en outre, en entrée, selon le cas, un signal (e4) de rétrogradage commandé ou un signal (e5) de passage des rapports en régime maximal ou un signal (e6) d'interdiction de passage en montée de rapport et, le cas échéant, un signal (e7) de "pied sur le frein" pour rétrogradage.

10. Boîte de vitesses selon la revendication 8 ou 9, dans laquelle la pression est une pression de fluide, caractérisée en ce que lesdits signaux de sortie agissent, d'une part (s1, s2), sur au moins un clapet (10̸ ou 10̸') du type à régulation proportionnelle et, d'autre part (s-I, s-II, s-III, s-IV, s-V, s-AR et s-TI), sur des moyens obturateurs du type électrovannes (9) à trois voies, dont le nombre correspond à celui des rapports, l'une desdites voies étant en liaison avec un moyen d'accouplement (5, 6 ou 5+6), une autre voie étant en liaison avec ledit clapet (10̸ ou 10̸'), tandis que la troisième voie est reliée à un bocal récupérateur pour le renvoi, vers ce dernier, de la pression résiduelle lors du désaccouplement.

11. Boîte de vitesses selon l'une quelconque des revendications 8 à 10̸, caractérisée en ce que le calculateur (7) est susceptible d'émettre, en outre, un signal (s3) commandant des moyens du type interrupteur (50̸) du système d'alimentation "moteur" pour permettre une brève chute du nombre de tours "moteur", grâce à quoi se trouvent facilités, d'une part, le décrabotage pendant la période de déphasage et, d'autre part, la synchronisation du pignon monté fou (2) concerné avec les moyens d'accouplement par crabotage (6, 6') correspondants pendant les montées de rapport.

## Patentansprüche

1. Getriebe für Kraftfahrzeug mit zwei oder vier Antriebsrädern, das wenigstens ein erstes, ein zweites, ein drittes und ein viertes Untersetzungsverhältnis der Kraftübertragung im Vorwärtsgang und ein Untersetzungsverhältnis im Rückwärtsgang besitzt, die Drehzahl einer Primärwelle (3) und die Drehzahl wenigstens einer Sekundärwelle (4, 4') durch eine geeignete Untersetzung zueinander in Beziehung setzen kann und auf einer Welle fest montierte Zahnräder (1) umfaßt, deren Zähne permanent in die Zähne von auf einer Welle beweglich montierten Zahnrädern (2) eingreifen, wobei jedes Zahnrad eine radiale Ebene besitzt, die einen Schnitt durch seine Zähne legt, die beweglich montierten Zahnräder (2-AR) des Rückwärtsgangs und des ersten Gangs (2-I) auf der Sekundärwelle (4) montiert sind, während die entsprechenden feststehend montierten Zahnräder des Rückwärtsgangs (1-AR) und des ersten Gangs (1-I) auf der Primärwelle (3) montiert sind, und zwischen die beweglich montierten Zahnräder (2) und ihre jeweiligen Wellen Kupplungsmittel (5, 6) eingesetzt sind, die die Drehung dieser beweglich montierten Zahnräder auf ihrer Welle einzeln blockieren können und auf diesen Wellen feststehend montiert sind, dadurch gekennzeichnet, daß diese Kupplungsmittel (5, 6) in einer bezüglich der Drehachse dieser Welle radialen Richtung wirken, die in der radialen Ebene des betreffenden Zahnrads liegt, und daß diese Kupplungsmittel im ersten Vorwärtsgang und im Rückwärtsgang vom Typ Reibungskupplung (5) sind und in den anderen Vorwärtsgängen vom Typ Klauenkupplung (6) sind.

2. Getriebe nach Anspruch 1, dadurch gekennzeichnet, daß jedes der Kupplungsmittel (5, 6) wenigstens zwei Einheiten umfaßt, die vom Umfang der Welle, auf der diese Mittel feststehend montiert sind, regelmäßig entfernt sind, in einer bezüglich der Achse dieser Welle radialen Richtung orientiert sind, wobei diese radiale Richtung innerhalb der radialen Ebene des betreffenden Zahnrads liegt
und jeweils einerseits eine zylindrische Kammer (24a, 24b) und andererseits einen Kolben (25a, 25b) umfassen, der eine "nahe" Seite (53), die nahe bei dieser Welle liegt, und eine "entfernte" Seite (54) besitzt, die von dieser Welle entfernt ist, und in dieser zylindrischen Kammer (24a, 24b) zwischen einer nahen ausgekuppelten Stellung und einer entfernten eingekuppelten Stellung beweglich ist, in letztere er durch einen vom Inneren dieser Welle aus ausgeübten Druck gebracht wird.

3. Getriebe nach Anspruch 2, dadurch gekennzeichnet, daß die entfernte Seite (54) des Kolbens (25b) im Fall der Klauenkupplungsmittel (6) einen Ansatz (70) aufweist, der mit einer Nut (27) mit entsprechender Form in Eingriff kommen kann, die in der Bohrung (22) des beweglich montierten Zahnrads (2) vorgesehen ist.

4. Getriebe nach Anspruch 2, dadurch gekennzeichnet, daß die entfernte Seite (54) des Kolbens (25a) im Fall der Reibungskupplungsmittel (5) einen gekrümmten Belag (21) trägt, der mit der Bohrung (22) des beweglich montierten Zahnrads (2) in Kontakt kommen kann.

5. Getriebe nach einem der Ansprüche 1 bis 4, dadurch gekennzeichnet, daß die beweglich montierten Zahnräder (2) zwischen einem Paar seitlicher Scheiben (28) montiert sind, wobei zwischen die einander gegenüberstehenden Seiten der Scheiben (28) und des Zahnrads (2) Kugeln (29) eingesetzt sind, die in zwischen diesen Seiten vorgesehenen Wälzbahnen oder Rollbahnen (71) eingeschlossen sind, und wobei die Scheiben (28) auf der Welle, zu der dieses Zahnrad (2) gehört, fest montiert sind.

6. Getriebe nach einem der Ansprüche 1 bis 5, dadurch gekennzeichnet, daß es außerdem elastische Mittel (30) besitzt, die eine Phasenverschiebung zwischen der Primärwelle (3) und der Sekundärwelle (4, 4') herstellen können, um die Auskupplung der betreffenden Klauenkupplungsmittel (6) aus dem entsprechenden beweglich montierten Zahnrad (2) zu erleichtern.

7. Getriebe nach einem der Ansprüche 1 bis 6 für einen Vorder- und Hinterradantrieb, bei dem diese Sekundärwelle (4) "erste" Sekundärwelle genannt wird, dadurch gekennzeichnet, daß sie außerdem kombinierte Reibungs- und Klauenkupplungsmittel (5, 6) umfaßt, die auf einer zweiten Sekundärwelle (4') fest montiert sind und zwischen ein Zahnrad (2-TI) eingesetzt sind, das auf dieser zweiten Sekundärwelle (4') beweglich montiert ist und im Verhältnis 1:1 permanent in ein auf der ersten Sekundärwelle (4) fest montiertes Zahnrad (1-IV) eingreift, so daß durch Kupplung dieses beweglich montierten Zahnrads (2-TI) mit der zweiten Sekundärwelle (4') durch Zwischenschaltung dieser kombinierten Reibungs- und Klauenkupplungsmittel (5, 6) ein Allradantrieb geschaffen wird.

8. Getriebe nach einem der Ansprüche 1 bis 7 für ein Fahrzeug mit zwei oder vier Rädern und einem manuellen Wähler (32) der Betriebsart (Stadt, Autobahn, Berg usw.), der einen Rechner (7) mit einem Mikroprozessor (31) besitzt, der die Drehzahl des Motors entweder beim Hinaufschalten senken oder beim Zurückschalten erhöhen kann, wodurch eine Synchronisation zwischen der Geschwindigkeit des beweglich montierten Zahnrads (2) des gewählten Gangs und der der Welle, auf der es montiert ist, bewirkt wird, um ihre Kupplung zu gestatten, dadurch gekennzeichnet, daß der Mikroprozessor für einen voreingestellten Gangwechsel oder Nicht-Gangwechsel programmiert ist.

9. Getriebe nach Anspruch 8, in dem der Rechner (7) in der Lage ist,
- an seinem Eingang vom Wähler (32) ein Signal (e1), das für die gewählte Betriebsart (33 - 37, 72) kennzeichnend ist, ein Signal (e2), das die Drehzahl am Eingang des Getriebes angibt, und ein Signal (e3) zu empfangen, das die Drehzahl am Ausgang des Getriebes der Sekundärwelle angibt, und
- an seinem Ausgang Signale (s1 und/oder s2; s-I, s-II, s-III, s-IV, s-V, s-AR und s-TI) für die Betätigung von auf die Kupplungsmittel (5, 6 oder 5 + 6) einwirkenden Betätigungsmitteln (10 oder 10'; 9-I, 9-II, 9-III, 9-IV, 9-V, 9-AR und 9-TI) zu senden,
dadurch gekennzeichnet, daß der Rechner außerdem je nach Fall ein Signal (e4) für das gesteuerten Herunterschalten, ein Signal (e5) für das Schalten bei maximaler Drehzahl oder ein Signal (e6) für die Sperrung des Hinaufschaltens und ggf. ein Signal (e7) "Fuß auf Bremse" für das Zurückschalten empfängt.

10. Getriebe nach Anspruch 8 oder 9, bei dem der Druck ein Fluiddruck ist, dadurch gekennzeichnet, daß diese Ausgangssignale einerseits (s1, s2) auf wenigstens ein Ventil (10 oder 10') vom Typ Proportionalregler und andererseits (s-I, s-II, s-III, s-IV, s-V, s-AR und s-TI) auf Absperrorgane vom Typ Dreiwegeventile (9) einwirken, deren Anzahl der der Gänge entspricht, wobei einer der Wege mit einem Kupplungsmittel (5, 6 oder 5 + 6) in Verbindung ist und ein anderer Weg mit diesem Ventil (10 oder 10') in Verbindung ist, während der dritte Weg mit einem Sammelbehälter verbunden ist, in den bei der Auskupplung der Restdruck zurückgeleitet wird.

11. Getriebe nach einem der Ansprüche 8 bis 10, dadurch gekennzeichnet, daß der Rechner (7) außerdem ein Signal (s3) aussenden kann, das Unterbrechereinrichtungen (50) des Motorspeisungssystems steuern kann, um einen kurzen Abfall der Motordrehzahl zu bewirken, wodurch einerseits die Trennung der Klauenkupplung in der Periode der Phasenverschiebung und andererseits die Synchronisierung des betreffenden beweglich montierten Zahnrads (2) mit den entsprechenden Klauenkupplungsmitteln (6, 6') beim Hinaufschalten erleichtert wird.

## Claims

1. Gearbox for a vehicle with two-wheel or four-wheel drive, offering at least a 1st, a 2nd, a 3rd and a 4th transmission reduction ratio in forward drive and one reduction ratio in reverse drive, the said gearbox being adapted to correlate, by an appropriate reduction, the number of revolutions of a primary shaft (3) and the number of revolutions of at least one secondary shaft (4, 4'), the said gearbox comprising pinions mounted in a fixed manner (1) on a shaft and whose teeth engage permanently with those of pinions mounted in a loose manner (2) on a shaft, each pinion having a radial plane intersecting its teeth, the loosely mounted pinions for reverse drive (2-AR) and first ratio (2-I) being mounted on the secondary shaft (4) while the corresponding fixedly mounted pinions for reverse drive (1-AR) and first ratio (1-I) are mounted on the primary shaft (3), and coupling means (5, 6), adapted to lock individually the said loosely mounted pinions in rotation on their shaft, being interposed between the said loosely mounted pinions (2) and their respective shafts, these coupling means (5, 6) being mounted in a fixed manner on the said shafts, characterised in that the said coupling means (5, 6) act in a direction which is radial with respect to the axis of rotation of the said shaft, the said radial direction being included within the radial plane of the pinion concerned, and in that the said coupling means are of the friction clutch type (5) on the first forward drive ratio and on the reverse drive, and of the dog clutch type (6) on the other forward drive ratios.

2. Gearbox according to Claim 1, characterised in that each of the said coupling means (5, 6) comprises at least two assemblies which are regularly spaced with respect to the periphery of the shaft on which the said means are fixedly mounted, the said assemblies being radially oriented with respect to the axis of the said shaft, the said radial direction being included in the said radial plane of the pinion concerned, and each of the said assemblies comprising, on the one hand, a cylindrical cavity (24a, 24b) and, on the other hand, a piston (25a, 25b) having a "proximal" face (53) close to the axis of the said shaft and a "distal" face (54) distant from the said axis, the said piston (25a, 25b) being movable in the said cylindrical cavity (24a, 24b), between a proximal uncoupled position and a distal coupled position, the latter being imposed on it by a pressure applied from inside the said shaft.

3. Gearbox according to Claim 2, characterised in that in the case of the dog clutch coupling means (6), the distal face (54) of the piston (25b) has a stud (70) adapted to engage with a groove (27), having corresponding geometry, provided in the bore (22) of the loosely mounted pinion (2).

4. Gearbox according to Claim 2, characterised in that in the case of the friction clutch coupling means (5), the distal face (54) of the piston (25a) carries a curved liner (21) adapted to come into contact with the bore (22) of the loosely mounted pinion (2).

5. Gearbox according to any one of Claims 1 to 4, characterised in that the loosely mounted pinions (2) are so mounted by insertion between a pair of lateral plates (28) with the interposition, between the opposing faces of the plates (28) and of the pinion (2), of captive balls (29) between running tracks (71) provided in the said faces, the said plates (28) being fixedly mounted on the shaft on which the said pinion (2) depends.

6. Gearbox according to any one of Claims 1 to 5, characterised in that it furthermore comprises elastic means (30) adapted for ensuring a phase shift between the said primary shaft (3) and the said secondary shaft (4, 4') in order to facilitate the uncoupling of the dog clutch means (6) concerned from the corresponding loosely mounted pinion (2).

7. Gearbox according to any one of Claims 1 to 6 applied to forward and reverse transmission, in which the said secondary shaft (4) is called the "first" secondary shaft, characterised in that it furthermore comprises combined dog clutch and friction clutch coupling means (5, 6) fixedly mounted on a second secondary shaft (4') and interposed between a pinion (2-TI) which is loosely mounted on the said second secondary shaft (4') and permanently engaged in a ratio of 1:1 with a pinion (1-IV) which is fixedly mounted on the said first secondary shaft (4), by means of which the coupling of the said loosely mounted pinion (2-TI) to the said second secondary shaft (4'), by the interposition of the said combined dog/friction clutch means (5,6), allows complete transmission to be obtained.

8. Gearbox according to any one of Claims 1 to 7, for two-wheel or four-wheel drive vehicles provided with a manual selector (32) for selecting the operating mode (town, motorway, mountain, etc), which comprises a computer (7) comprising a microprocessor (31) adapted either to lower the engine speed for an upward change of ratio, or to increase the said engine speed for changing down, thus ensuring synchronisation between the speed of the loosely mounted pinion (2) of the selected ratio and that of the shaft on which it is mounted in order to allow their coupling, characterised in that the said microprocessor is programmed for a pre-established change or non-change of ratios.

9. Gearbox according to Claim 8, in which the computer (7) is adapted:
- to receive from the selector (32), as input, a signal (e1) which is characteristic of the selected type of operating mode (33-37, 72), a signal (e2) indicating the number of revolutions at the input of the gearbox, a signal (e3) indicating the number of revolutions at the output of the gearbox of the secondary shaft, and
- to transmit, as output, actuating signals (s1 and/or s2; s-I, s-II, s-III, s-IV, s-V, s-AR and, s-TI) for the control means (10 or 10'; 9-I, 9-II, 9-III, 9-IV, 9-V, 9-AR and 9-TI) acting on the coupling means (5, 6 or 5+6), characterised in that the said computer furthermore receives, as input and, depending on the case, a controlled changedown signal (e4) or a ratio change signal (e5) at maximum engine speed or a signal (e6) prohibiting an upward change of ratio and, if necessary, a "foot on brake" signal (e7) for changedown.

10. Gearbox according to either of Claims 8 or 9, in which the pressure is a fluid pressure, characterised in that the said output signals (s1, s2) act, on the one hand, on at least one valve (10 or 10') of the proportional regulation type and, on the other hand (s-I, s-II, s-III, s-IV, s-V, s-AR and s-TI), on stopping means of the three-way electrovalve type (9), the number of which corresponds to that of the ratios, one of the said ways being connected to a coupling means (5, 6 or 5+6), another way being connected to the said valve (10 or 10') while the third way is connected to a retrieval container for the return, to the latter, of the residual pressure during uncoupling.

11. Gearbox according to any one of Claims 8 to 10, characterised in that the computer (7) is furthermore capable of transmitting a signal (s3) controlling switch-type means (50) of the "engine" power supply system in order allow a brief drop in the number of "engine" revolutions by means of which, on the one hand, the dog clutch may be disengaged during the phase shift period and, on the other hand, the loosely mounted pinion (2) concerned may be synchronised with the corresponding dog clutch coupling means (6, 6') during increases in ratio.
